# EUROPÄISCHE PATENTANMELDUNG

(11) **EP 1 000 649 A1**
(43) Veröffentlichungstag der Anmeldung: **17.05.2000**
(21) Anmeldenummer: 99119269.1
(22) Anmeldetag: 28.09.1999
(51) Int. Cl.: B01D 36/00, C02F 1/00

(54) **Wasserkreislauf mit Filterstufe**

(30) Priorität: 08.10.1998 DE 19846380
(71) Anmelder: USF Deutschland GmbH, 56235 Ransbach-Baumbach (DE)
(72) Erfinder: Lintner, Walter, 1150 Wien (AT)
(74) Vertreter: Jochem, Bernd, Dipl.-Wirtsch.-Ing.

(57) **Zusammenfassung**

In einem Wasserkreislauf ist ein durchströmtes Gehäuse (10) angeordnet, das eine Filterstufe (24) aufnimmt. In der Wasserströmung mitgenommene Gasblasen können in der Filterstufe (24) ausgasen und die Systemleistung verschlechtern. Um eine sichere Entgasung ohne platzaufwendige Ausgleichsbehälter mit Überdruckventil zu ermöglichen, wird vorgeschlagen, die Filterstufe (24) wenigstens zum Gehäuseauslauf hin von einem Rückhalteelement (26) zu begrenzen und an der Oberseite des Gehäuses (10) ein Entlüftungsventil (28) mit einer hydrophoben, gasdurchlässigen Membran (29) vorzusehen. Damit kann eine wirksame Entgasung des umlaufenden Wassers direkt am Schwerpunkt der Gasblasenbildung erfolgen.

## Beschreibung

Die Erfindung betrifft einen Wasserkreislauf mit einem durchströmten Gehäuse, das eine Filterstufe enthält, die z. B. aus einer Schüttfüllung mit Ionenaustuschermaterial, Filterkörpern, Filtermembranen oder anderem der Reinigung und Behandlung des Wassers dienenden Filtermaterial bestehen kann.

In vielen Wasserkreisläufen ist es notwendig, mit Hilfe einer kontinuierlich durchströmten Filterstufe für eine Reinhaltung des Wassers zu sorgen, das an einer anderen Stelle des Kreislaufes Verschmutzungen aufnimmt oder das durch chemische Prozesse, beispielsweise in korrosionsempfindlichen Leitungen, verunreinigt wird. Bei nicht vollständig geschlossenen Wasserkreisläufen können sich unter Umständen Gase in dem umlaufenden Wasser lösen, und auch infolge der bereits angesprochenen Korrosionsvorgänge kann ein Lösen von Gasen in dem Wasser geschehen. Außerdem können im Einzelfall Gasblasen in das Wasser gelangen, die von der Strömung mitgenommen werden. In den mit sehr großen wirksamen Oberflächen und vielen Poren arbeitenden Filterstufen kann es dazu kommen, daß das gelöste Gas aus dem Wasser ausgast und sich von der Strömung herangeführte Gasblasen verfangen. Die vermehrten und vergrößerten Gasblasen haben je nach Art des Wasserkreislaufes eine Verschlechterung der Systemleistungen zur Folge und können bei geschlossenen Wasserkreisläufen auch zu einem erheblichen Druckanstieg und gelegentlich unerwünschter Elastizität führen. Übliche Lösungen mit einem Ausgleichsbehälter und einem Überdruckventil benötigen einen sehr großen Bauraum und bergen aus serdem die Gefahr in sich, daß durch sich öffnende Überdruckventile umgekehrt Verschmutzungen in das Wasser gelangen können.

Die Aufgabe der Erfindung besteht darin, einen Wasserkreislauf mit einer Filterstufe zu schaffen, der möglichst platzsparend ausgebildet werden kann und eine sichere Entgasung bei größtmöglicher Reinhaltung des Wassers ermöglicht.

Erfindungsgemäß wird die Aufgabe durch einen Wasserkreislauf mit einem durchströmten Gehäuse gelöst, das eine Filterstufe enthält, die wenigstens zum Auslauf hin von einem wasserdurchlässigen Rückhalteelement begrenzt ist, und an seiner Oberseite ein Entlüftungsventil aufweist, in dessen Querschnitt eine hydrophobe, gasdurchlässige Membran vorgesehen ist.

Der erfindungsgemäße Wasserkreislauf bietet den Vorteil, daß mit Hilfe der beispielsweise aus PTFE bestehenden hydrophoben Membran eine wirksame Entgasung des umlaufenden Wassers direkt am Schwerpunkt der Gasblasenbildung und -sammlung erfolgen kann, ohne daß ein platzaufwendiger Ausgleichsbehälter vorgesehen werden müßte. Das Gehäuse der Filterstufe mit dem vorgeschlagenen Entlüftungsventil ist bei dem erfindungsgemäßen Wasserkreislauf praktisch nicht größer als eine ohnehin vorzusehende Filterstufe ohne Entlüftungsventil. Die hydrophobe Eigenschaft der Membran verhindert dabei ein Austreten von Wasser durch das Entlüftungsventil.

Das Rückhalteelement, das von dem zirkulierenden Wasser durchströmt wird und beispielsweise aus einem gesinterten Kunststoff und/oder einem engmaschigen Metalisieb bestehen kann, hat einerseits die Aufgabe, das Filtermaterial, insbesondere loses Schüttmaterial, der Filterstufe zurückzuhalten und am Ausschwemmen aus der Filterstufe zu hindern, andererseits kann es, falls gewünscht, als Partikelfilter ausgebildet sein und dann für eine Vorfiltration und Verteilung des in die Filterstufe einströmenden Wassers sorgen. Vorzugsweise wird die Filterstufe sowohl auf der Zulauf-, als auch auf der Ablaufseite von Rückhalteelementen mit Sperrschicht- und Distributorfunktion begrenzt.

Die Porengröße der bevorzugten PTFE-Membran liegt unter 0,02 µm. Um der druckempfindlichen PTFE-Membran zusätzliche mechanische Festigkeit zu verleihen, ist sie in weiterer bevorzugter Ausgestaltung der Erfindung durch ein Stützgewebe oder einen Stützhalter verstärkt oder abgestützt. Das Stützgewebe ist so auszulegen, daß es die infolge des Drucks in dem Wasserkreislauf auf die PTFE-Membran wirkenden Kräfte aufnehmen und letztere vor Beschädigungen schützen kann.

Die Filterstufe besteht vorzugsweise aus einer Schüttfüllung von Ionenaustauschermaterial, insbesondere Adsorberharz, und/oder Aktivkohle. Je nach Art der zu beseitigenden Verunreinigungen und der Anforderungen an die Wassergüte, können diese Materialien einzeln oder in Kombination eingesetzt werden, wobei zweckmäßigerweise zwischen nacheinander durchströmten verschiedenen Materialien weitere Sperrschichten vorgesehen werden. Selbstverständlich können zu einem Wasserkreislauf mehrere Filterstufen gehören, die parallel oder in Reihe angeordnet und sämtlich oder nur zum Teil mit Entlüftungsventilen mit gasdurchlässiger, hydrophober Membran versehen sein können.

Die Durchströmung des Gehäuses erfolgt vorzugsweise von oben nach unten, was beispielsweise bei Mischbett-Ionenaustauschern einer Entmischung der beiden Bestandteile Kationen- und Anionenaustauscher entgegenwirkt.

Vorzugsweise, aber nicht notwendigerweise sitzt das Entlüftungsventil in einem abnehmbaren Deckel des Gehäuses. Er ermöglicht den leichten Austausch der Schüttfüllung. Eine besonders einfache Erneuerung der Filterstufe ist möglich, wenn sowohl der Deckel als auch der Boden von dem Rest des Gehäuses lösbar und der Einlauf und Auslauf der Filterstufe im Deckel bzw. Boden vorgesehen sind. Dadurch kann nach dem Lösen von Deckel und Boden der Rest des Gehäuses mitsamt der Filterstufe entnommen und durch eine neue Filterstufe ersetzt werden. Die Aufbereitung verbrauchter Filterstufen kann dann beispielsweise von einem darauf spezialisierten Betrieb unter den notwendigen Reinheitsbedingungen vorgenommen werden.

Ein besonders einfacher Austausch der Filterstufe ist möglich, wenn das Gehäuse eine zylindrische Kartusche aufweist, welche die Filterstufe enthält und über Gewindeverbindungen mit dem Boden und dem Deckel verbunden ist.

Nachfolgend wird anhand der beigefügten Zeichnung näher auf ein Ausführungsbeispiel der Erfindung eingegangen. Es zeigen:
- Fig. 1: einen Querschnitt eines Gehäuses mit einer Filterstufe als Teil eines Wasserkreislaufs;
- Fig. 2: eine Draufsicht auf das Gehäuse nach Fig. 1.

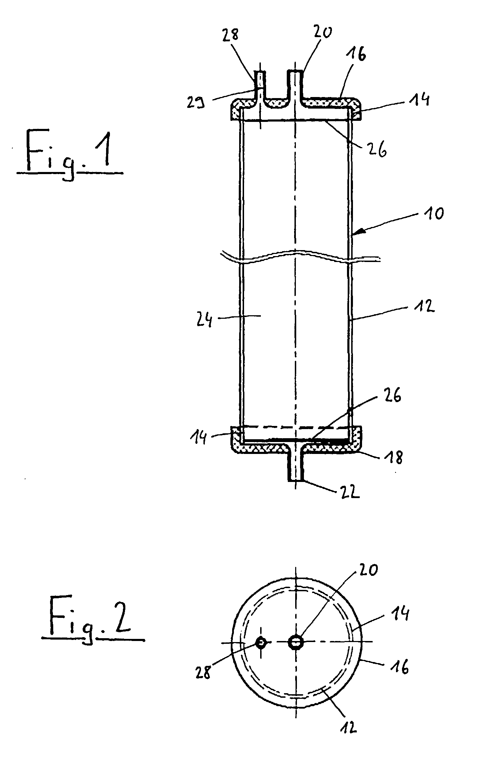

Das in Fig. 1 dargestellte Gehäuse 10 besteht im wesentlichen aus einer rohrförmigen, zylindrischen Kartusche 12, die an ihren Enden mit Außengewinden 14 versehen ist, und einem auf die Kartusche 12 aufgeschraubten Deckel 16 sowie einem ebenfalls mit der Kartusche 12 verschraubten Boden. Der Deckel und/oder der Boden können auch in anderer Weise mit der Kartusche zu verbinden oder fest daran angebracht sein. In dem Deckel 16 ist ein Einlaufstutzen 20 vorgesehen, durch welchen das umlaufende Wasser in das Gehäuse eingeleitet wird. Über einen Auslauf 22 im Boden 18 des Gehäuses 10 verläßt das umlaufende Wasser dem Gehäuse 10 wird und beispielsweise anschließend über ein Kühlsystem umgewälzt. Der Wasserkreislauf ist durch den Einlauf 20 und Auslauf 22 angedeutet, aber wegen der unterschiedlichen Gestaltungsmöglichkeiten im einzelnen nicht dargestellt.

Die Kartusche 12 nimmt im Beispielsfall eine Filterstufe 24 auf, die durch zwei Rückhalteelemente in Form von Sperrschichten 26 mit Distributorfunktion begrenzt ist. Die Sperrschichten 26 bestehen aus einem gesinterten Kunststoff, der einerseits einen niedrigen Fließwiderstand für das umlaufende Wasser bietet und andererseits in der Lage ist, Partikel aus dem Wasserstrom herauszufiltern.

Zwischen den beiden Sperrschichten 26, die an den Enden der Kartusche 12 angeordnet sind, ist die eigentliche Filterstufe zur Reinigung des umlaufenden Wassers vorgesehen. Diese besteht im gezeigten Beispiel aus einer Schüttfüllung, beispielsweise einem Ionenaustauschermaterial und/oder Aktivkohle. Die Sperrschichten verhindern, daß das lose Schüttmaterial unter dem Einfluß der Schwerkraft und der Strömungskräfte des umlaufenden Wasserstromes aus dem Gehäuse 10 ausgeschwemmt wird. Die Wahl der in der Filterstufe 24 zum Einsatz kommenden Materialien richtet sich nach den Anforderungen an die Wasserreinigung, wobei auch Kombinationen verschiedener Füllungen denkbar sind. Diese verschiedenen Materialien können durch weitere Sperrschichten an einer gegenseitigen Vermischung gehindert werden.

In dem Deckel 16 des Gehäuses 10 ist ferner ein Entlüftungsventil 28 vorgesehen, dessen Querschnitt mit einer gasdurchlässigen, hydrophoben PTFE-Membran 29 verschlossen ist. Diese PTFE-Membran 29 kann mit Hilfe eines Stützgewebes gegen mechanische Belastung verstärkt sein.

Das Entlüftungsventil 28 bietet aufgrund der PTFE-Membran die Möglichkeit, Gasblasen, die insbesondere im Bereich der Filterstufe 24 entstehen oder dort aufgefangen werden, an Ort und Stelle ohne großen baulichen oder konstruktiven Aufwand aus dem umlaufenden Wasserstrom zu entfernen.

Insgesamt hat der Behälter 10 mit Entlüftungsventil 28 im Wasserkreislauf eine Mehrfachfunktion. Er dient dazu, Partikel aus dem Wasserstrom herauszufiltern, die gewünschte Reinheit des zirkulierenden Wassers aufrechtzuerhalten und den Wasserstrom zu entgasen, um beispielsweise einer Verschlechterung des Wirkungsgrades eines Kühlkreislaufes entgegenzuwirken.

## Patentansprüche

1. Wasserkreislauf mit einem durchströmten Gehäuse (10), das eine Filterstufe (24) aufnimmt, die wenigstens zum Gehäuseauslauf hin von einem wasserdurchlässigen Rückhalteelement (26) begrenzt ist, und an seiner Oberseite ein Entlüftungsventil (28) aufweist, in dessen Querschnitt eine hydrophobe, gasdurchlässige Membran (29) vorgesehen ist.

2. Wasserkreislauf nach Anspruch 1, **dadurch gekennzeichnet**, daß die Membran (29) eine PTFE-Membran mit einer Porengröße von weniger als 0,02 µm ist.

3. Wasserkreislauf nach Anspruch 1 oder 2, **dadurch gekennzeichnet**, daß ein Stützgewebe oder ein Stützhalter zur mechanischen Verstärkung der Membran vorgesehen ist.

4. Wasserkreislauf nach einem der Ansprüche 1 bis 3, **dadurch gekennzeichnet**, daß wenigstens eines der Rückhalteelemente als Sperrschicht für das Filtermaterial und Distributor (26) für das Wasser ausgebildet ist und aus einem gesinterten Kunststoff und/oder einem engmaschigen Metallsieb besteht.

5. Wasserkreislauf nach einem der vorhergehenden Ansprüche, **dadurch gekennzeichnet**, daß die Filterstufe (24) durch eine Schüttfüllung aus Ionenaustauschermaterial und/oder Aktivkohle gebildet ist.

6. Wasserkreislauf nach Anspruch 5, **dadurch gekennzeichnet**, daß die Filterstufen aus verschiedenen, jeweils durch eine Sperrschicht mit Distributorwirkung getrennten Materialien besteht.

7. Wasserkreislauf nach einem der vorhergehenden Ansprüche, **dadurch gekennzeichnet**, daß das Gehäuse (10) der Filterstufe von oben nach unten durchströmt ist.

8. Wasserkreislauf nach einem der vorhergehenden Ansprüche, **dadurch gekennzeichnet**, daß das Entlüftungsventil (28) in einem abnehmbaren Deckel (16) des Gehäuses (10) sitzt.

9. Wasserkreislauf nach Anspruch 8, **dadurch gekennzeichnet**, daß der Deckel einen Einlauf (20) und der vorzugsweise ebenfalls vom Rest (12) des Gehäuses lösbare Boden (18) einen Auslauf (22) besitzt.

10. Wasserkreislauf nach Anspruch 9, **dadurch gekennzeichnet**, daß das Gehäuse (10) eine zylindrische Kartusche (12) aufweist, welche die Filterstufe (24) enthält und über Gewindeverbindungen (14) mit dem Boden (18) und dem Deckel (16) verbunden ist.
